# FASCICULE DE BREVET EUROPEEN

(11) **EP 2 553 259 B1**
(45) Date de publication et mention de la délivrance du brevet: **04.01.2017**
(21) Numéro de dépôt: 11715952.5
(22) Date de dépôt: 21.03.2011
(51) Int. Cl.: F02N 15/06, F16C 33/10

(54) **PALIER AVANT DE DEMARREUR DE MOTEUR THERMIQUE A PIGNON SORTANT ET DEMARREUR A PIGNON SORTANT COMPORTANT UN TEL PALIER**
STARTER FÜR EINEN VERBRENNUNGSMOTOR MIT AUSGEHENDEN RITZEL
STARTER FOR INTERNAL COMBUSTION ENGINE WITH OUTGOING PINION

(30) Priorité: 29.03.2010 FR 1052272
(43) Date de publication de la demande: 06.02.2013
(73) Titulaire: Valeo Equipements Electriques Moteur, 94046 Créteil Cedex (FR)
(72) Inventeur: CHALMET, Alexis, F-69008 Lyon (FR); PALTRIE, Thierry, F-69008 Lyon (FR)
(86) Numéro de dépôt international: PCT/FR2011/050571
(87) Numéro de publication internationale: WO 2011/124798

(56) Documents cités:
- FR-A1- 2 764 946
- JP-U- H0 265 715
- US-A- 2 337 403
- US-A- 4 995 275
- US-A- 5 001 377
- US-B2- 6 845 681

## Description

### Domaine de l'invention

La présente invention concerne un palier avant de démarreur de moteur thermique doté d'un lanceur à pignon sortant, notamment pour véhicule automobile, et un démarreur à pignon sortant, notamment pour véhicule automobile, comportant un tel palier.

### Etat de la technique

Un tel démarreur est décrit dans les documents FR 2 764 946, US 4 995 275 et US 5101114 auxquels on se reportera pour plus de précisions.

Ce démarreur comporte, comme visible dans le document US 5 101 114, un carter à l'intérieur duquel est logé un moteur électrique, dont l'arbre est destiné à entraîner en rotation un arbre de sortie du démarreur portant à engrènement un entraîneur appartenant à un lanceur comprenant un pignon sortant.

Selon les applications l'arbre de sortie du démarreur est, comme dans le document US 5 101 114, confondu avec l'arbre du moteur électrique, ou, comme visible dans les documents FR 2 764 946 et US 4 995 275, distinct de l'arbre du moteur électrique.

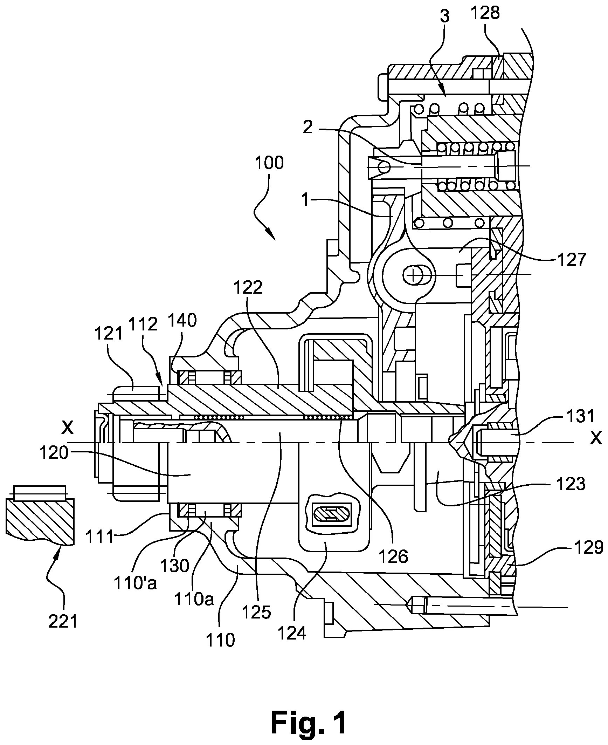

Le carter du démarreur comporte un palier avant configuré pour fixation du démarreur sur une partie fixe, une culasse et un palier arrière pour montage à rotation de l'extrémité arrière de l'arbre du moteur électrique.
La culasse porte l'inducteur, tel que des aimants ou des bobinages, du moteur électrique entourant un induit bobiné solidaire de l'arbre de ce moteur. Cette culasse est intercalée axialement entre les paliers avant et arrière.
Comme visible dans la figure 1, qui est une vue schématique partielle en coupe longitudinale d'un démarreur à pignon sortant identique à la figure 1 du document FR 2 764 946, le lanceur 120 de ce type de démarreur 100 présente à son extrémité avant un corps principal cylindrique 122 cylindrique traversant une ouverture 112 circulaire du palier avant 110 réalisée dans une paroi transversale avant 111 de ce palier 110. Le pignon 121 est dit pignon sortant car il est implanté à l'extérieur du palier 110 sur le corps 122 du lanceur 120. Dans cette réalisation le corps 122 est en forme de douille et constitue le corps principal du pignon 121 d'un seul tenant avec ce corps 122, qui est métallique et d'une grande dureté car l'arrière de ce corps constitue la piste interne de la roue libre à galets 124 intercalée entre le corps 122 et l'extrémité arrière 123 du lanceur 120 constituant un entraîneur.
L'arbre de sortie 125 du démarreur pénètre à l'intérieur de ce corps principal 122. Des moyens de palier 126, ici en forme de coussinets, interviennent entre la périphérie externe de l'arbre de sortie 125 et la périphérie interne du corps 122 en forme de douille pour guidage axial de ce corps principal 122. En variante les coussinets 126 sont remplacés par des roulements à aiguilles. Dans cette figure 1 l'axe X-X constitue l'axe de symétrie axial du corps 122 et de l'arbre de sortie 125. Les références 1, 2 et 3 désignent respectivement une fourchette, le noyau mobile et le contacteur électromagnétique porté par le palier 110. La fourchette 1 présente des doigts reçu dans une gorge (non référencée) de l'entraîneur 123. Cette fourchette est articulée en un point intermédiaire sur une chape 127 surmoulée sur une plaque intermédiaire 128 intercalée entre la face arrière du palier avant 110 et une cuve (non référencée) que comporte le contacteur, qui s'étend parallèlement au moteur électrique et au lanceur 120. Dans cette figure 1 on voit l'une des vis de fixation de la cuve du contacteur électromagnétique 3 au palier avant 110 de forme creuse.

La plaque 128 porte un réducteur de vitesse à train épicycloïdal 129 intercalé entre l'arbre 131 du moteur électrique et l'arbre de sortie 125 du démarreur. L'arbre de sortie 125 et l'entraîneur 123 présentent respectivement à leur périphérie externe et interne des cannelures et des rainures hélicoïdales complémentaires. Le lanceur 120 et le pignon 121 peuvent ainsi se déplacer axialement et en rotation lorsque la fourchette 1 agie sur l'entraîneur 123.

Le lanceur 120 et le pignon 121 sont donc destinés à être déplacés axialement entre une position de repos, visible à la figure 1, et une position avancée d'engrènement avec une couronne dentée de démarrage 221 reliée de manière directe ou élastique au vilebrequin du moteur thermique à démarrer. Dans cette position avancée la couronne est entraînée en rotation par le moteur électrique lorsque celui-ci est alimenté électriquement.
Plus précisément la fourchette 1 est destinée à être actionnée à pivotement par le noyau mobile 2 du contacteur électromagnétique 3, qui est ici du type de celui décrit par exemple dans les documents WO 2004/088126 et WO 03/002870 auxquels on se reportera pour plus de précisions. Cette fourchette est reliée, à la figure 1, comme à la figure 6 du document WO 2004/088126, à son extrémité supérieure à articulation à une tige reliée élastiquement au noyau mobile du contacteur configuré pour agir sur un poussoir, en forme de tige, portant un contact mobile, en forme de plaque, agencé pour venir en contact avec deux bornes d'alimentation électrique pour alimentation du moteur électrique du démarreur afin d'entraîner en rotation la couronne de démarrage du moteur thermique lorsque le pignon 121 et le corps principal 122 du lanceur 120 sont en position avancée et en prise avec la couronne de démarrage 221.
L'une des bornes est destinée à être reliée à la borne positive de la batterie du véhicule automobile. L'autre borne est destinée à être reliée électriquement au moteur électrique du démarreur.
Le contacteur comporte également un noyau fixe, au moins une bobine ainsi que des ressorts, notamment de rappel pour rappeler le noyau mobile en position de repos. Lorsque le conducteur agit sur la clé de contact ou introduit une carte de démarrage, il se produit la fermeture d'un contact et une alimentation électrique de la bobine du contacteur en sorte que le noyau mobile est déplacé en direction du noyau fixe et déplace la fourchette et le poussoir.
Le lanceur 120 est déplacé axialement et en rotation par le pivotement de la fourchette 1. Au bout d'une course donnée le contact mobile vient en contact électrique avec les bornes d'alimentation électrique et le moteur électrique est alimenté électriquement et fait tourner l'arbre de sortie du démarreur. Le pignon occupe alors une position avancée d'engrènement avec la couronne de démarrage 221 du moteur thermique.

Le corps principal 122 est guidé axialement par un roulement 130 agissant entre la périphérie externe du corps principal 122 et la périphérie interne 110'a d'un manchon 110a, que présente à l'avant le palier 110.
L'alésage interne du manchon 110a est étagé en diamètre. Il est ouvert à l'arrière et délimité à l'avant par la paroi transversale avant 111 du palier 110. Cette paroi 111 fait partie de la face avant du palier 110. L'ouverture 112 de la paroi 111 appartient donc à l'alésage interne du manchon 110 et constitue le plus petit diamètre de l'alésage interne du manchon 110a.
Le roulement 130 peuvent consiste en un roulement à aiguilles, comme dans ce document FR 2 764 946, ou en un roulement à billes comme dans les document US 4 995 275 et US 5 101 114, ou en roulement à rouleaux.

Dans les documents précités il est prévu un joint d'étanchéité permettant d'éviter la pénétration de poussières, de toute autre souillure ou d'eau chargée d'éléments corrosifs, qui pourraient entraîner une détérioration des surfaces de frottement entre le roulement 130 et le corps 122 du lanceur.
Ce joint porte la référence 140 à la figure 1. Il est positionné dans le palier 110 au niveau de l'ouverture 112. Il est intercalé entre la face arrière de la paroi 111 et la face avant du roulement à aiguilles 130. La périphérie interne du joint coopère avec la périphérie externe du corps 122 pour réaliser l'étanchéité précitée et protéger la périphérie externe du corps 122 et la périphérie interne du roulement 130.
La paroi 111 constitue donc un épaulement pour le joint 140. Le périphérie externe du roulement 130 est en contact avec la périphérie interne 110'a de plus grand diamètre de l'alésage interne du manchon 110a.

Il est souhaitable d'améliorer encore le coulissement du corps 122.
Pour ce faire il est prévu dans le document US 4 995 275 de réaliser des rainures à la périphérie interne de la bague interne du roulement à billes, constituant les moyens de palier. Ces rainures sont remplies de graisse.
Il y a ainsi création d'un film d'huile entre la bague interne et la périphérie externe du corps principal du lanceur, qui peut ainsi coulisser plus facilement. En outre on diminue l'usure de la bague interne du roulement.

Cette solution pose un problème car le remplissage de graisse des rainures n'est pas aussi simple que souhaité.

### Objet de l'invention

La présente invention a pour objet de résoudre ce problème.

Suivant l'invention un palier avant de démarreur de moteur thermique doté d'un lanceur à pignon sortant, notamment pour véhicule automobile, du genre comportant à l'avant une paroi transversale munie d'une ouverture pour passage d'un corps du lanceur, une cavité annulaire ménagée dans la face arrière de la paroi transversale à la périphérie interne de celle-ci pour montage d'un joint d'étanchéité, dans lequel la face arrière de la paroi transversale est configurée pour constituer une butée d'appui pour la bague externe d'un roulement, est caractérisée en ce que cette face arrière présente au moins une creusure destinée à être remplie de graisse pour formation d'une réserve de graisse et en ce que la creusure est implantée au moins en majeure partie à l'extérieur de la cavité.

Suivant l'invention un démarreur à pignon sortant, notamment pour véhicule automobile, est caractérisé en ce qu'il comporte un palier avant selon l'invention.

L'invention permet donc de simplifier la réalisation et le remplissage de la réserve de graisse.

Cela permet également d'améliorer le coulissement du corps du lanceur et donc d'augmenter la durée de vie et la fiabilité du démarreur du fait de la présence de la réserve de graisse permettant de contenir une plus grande quantité de graisse.

Selon d'autres caractéristiques prises isolément et/ou en combinaison :
- la cavité est équipée d'un joint d'étanchéité comportant au moins une lèvre inclinée vers l'avant ;
- le joint comporte à l'avant une partie en élastomère et à l'arrière une rondelle de renfort ;
- la longueur axiale de la cavité est supérieure ou globalement égale à l'épaisseur du joint ;
- le palier avant présente intérieurement une face interne cylindrique d'orientation axiale se raccordant à la périphérie externe de la face la face arrière de la paroi transversale pour formation d'un chambrage ;
- le palier avant est équipé d'un roulement comportant une bague externe ;
- le roulement est monté dans le chambrage ;
- la cavité est décalée axialement vers l'avant par rapport au roulement ;
- un jeu axial existe entre la face arrière du joint et la face avant du roulement ;
- au moins un passage pour la graisse existe entre la creusure et la face avant du roulement ;
- le passage comporte au moins un canal ;
- la creusure est borgne ;
- la périphérie externe de la bague externe est en contact de serrage avec la face interne cylindrique du chambrage ;
- la face interne de la paroi constitue une butée d'appui pour la face avant de la bague externe ;
- le roulement consiste en un roulement à billes étanche;
- la creusure est réalisée à la périphérie externe de la face interne et affecte localement la butée d'appui de la face avant de la bague externe ;
- la creusure s'étend circonférentiellement globalement sur 120°;
- la creusure est réalisée dans la portion haute de la face interne la plus proche de la périphérie externe du palier avant ;
- la creusure est délimitée intérieurement par au moins une bande de matière définissant avec les bords latéraux de la creusure au moins un canal ;
- le ou les canaux débouchent dans la cavité ;
- la creusure consiste en une gorge annulaire ;
- La cavité est délimitée par un tronçon d'orientation de la paroi d'orientation transversale, qui est entaillée à l'arrière localement par le ou les canaux.

Grâce à l'invention le roulement, de préférence étanche, n'est pas modifié. On peut donc utiliser un roulement à billes ou un roulement à rouleaux du type standard. La réserve de graisse est facile à remplir et est masquée par le roulement en sorte que le palier avant équipé de son joint d'étanchéité, de son roulement et de sa réserve de graisse forme un ensemble manipulable et transportable sans risque de coulure ou de pollution de la graisse.
La réserve de graisse est économique car la creusure est facile à réaliser par exemple par moulage ou usinage.

La graisse s'écoule progressivement par gravité et permet d'assurer la lubrification et la protection contre la corrosion de l'interface corps principal du lanceur/ roulement à billes en sorte que la durée de vie du démarreur est augmentée.
Le joint est ans un mode de réalisation simplifié par rapport à celui des documents FR 2 764 946 et US 4 995 275.

D'autres caractéristiques et avantages de l'invention apparaîtront à la lecture de la description qui suit en regard aux dessins annexés.

### Brève description des dessins

- la figure 1 est une vue schématique partielle en coupe longitudinale d'un démarreur à pignon sortant de l'art antérieur ;
- la figure 2 est une vue de la face arrière d'un palier avant du carter d'un démarreur à pignon sortant doté d'une réserve de graisse selon l'invention ;
- la figure 3 est une vue partielle à plus grande échelle de la partie centrale de la figure 2 montrant la réserve de graisse ;
- la figure 4 est une demi vue en coupe selon la ligne 4-4 de la figure 3 montrant le palier des figures 2 et 3 équipé de son joint d'étanchéité et de son roulement à billes ;
- la figure 5 est une vue en coupe complète de la figure 4 avec représentation partielle du corps principal en forme de douille du lanceur ;
- la figure 6 est une vue selon la ligne 6-6 de la figure 3 avec représentation partielle du corps principal du lanceur à pignon sortant ;
- la figure 7 est une vue analogue à la figure 4 pour un deuxième exemple de réalisation selon l'invention ;
- la figure 8 est une vue analogue à la figure 5 pour ce deuxième exemple de réalisation.

### Description d'exemples de réalisation de l'invention

Dans les figues 2 à 8 les éléments communs à l'invention et à ceux du document FR 2 764 946 seront affectés des mêmes signes de référence.

Dans la suite de la description, d'une part, une orientation de l'arrière à l'avant correspond dans la figure 1 à une orientation de droite à gauche et d'autre part, les orientations transversales, axiales et radiales seront définies par rapport à l'axe X-X, qui est l'axe de symétrie axiale du lanceur 120 et de l'arbre de sortie du démarreur. Cet axe définit également le centre de l'ouverture 112 réalisée centralement dans la paroi transversale avant 111, que présente à l'avant le palier avant 110. La paroi 111 appartient à la face avant du palier 110 .L'ouverture 112 permet le passage du corps 122 du lanceur 120 à pignon sortant

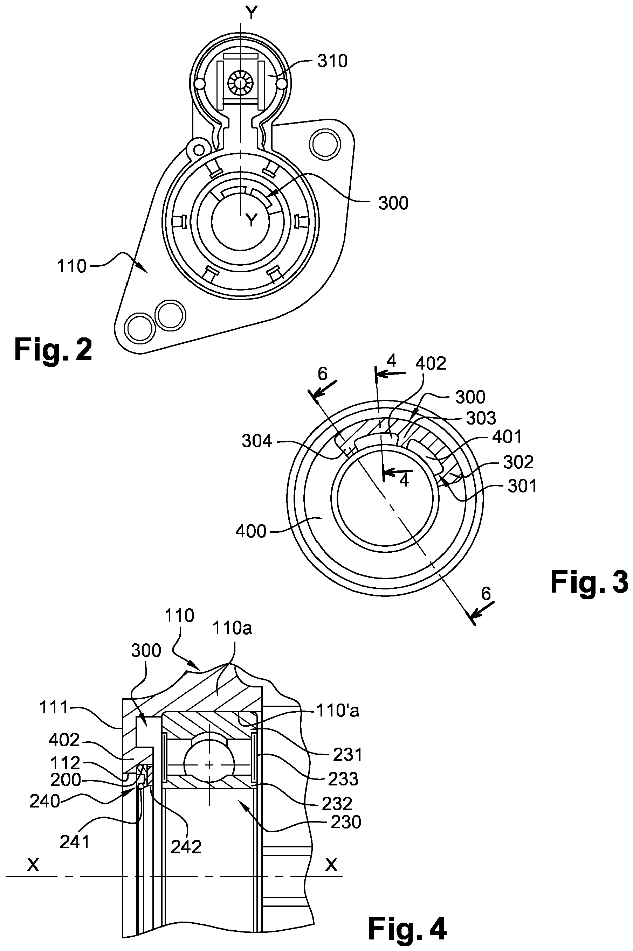

Dans les figures 2 à 8 on conserve la structure générale du démarreur 100 de la figure 1. Ainsi on ne modifie pas le lanceur 120 à corps principal 122 métallique en forme de douille, l'arbre 131 du moteur électrique, la liaison à cannelures et rainures hélicoïdales complémentaires entre l'arbre 131 et l'entraîneur 123, le réducteur 129 intervenant entre les arbres 131 et 125, le contacteur électromagnétique 3, porté par le palier avant 110, ainsi que la fourchette 1 articulée sur la chape 127 de la plaque 128 et reliant le noyau mobile 2 du contacteur 3 à l'entraîneur 123 du lanceur.

On conserve en majeure partie le palier avant 110 du carter du démarreur.

La partie avant du palier avant 110 du carter du démarreur est modifiée, selon une caractéristique au niveau de sa paroi transversale avant 111.
Cette paroi 111 est épaissie et on creuse la face arrière 400, c'est à dire la face interne, de cette paroi 111 pour formation d'une cavité annulaire 200 de réception et de maintien d'un joint annulaire à lèvre 240, ainsi que pour formation d'au moins une creusure 300, 1300 remplie de graisse pour formation d'une réserve de graisse afin de lubrifier la périphérie externe du corps principal 122 du lanceur 120.

La creusure est borgne du fait que cette creusure est réalisée dans la face arrière 400, qui est évidée en étant creusée à cet effet.

La résistance mécanique du palier avant n'est pas affectée outre mesure par la cavité 200 et la creusure 300, 1300 puisque la paroi 111 est épaissie par rapport à celle du document FR 2 764 946.

En outre la creusure permet d'être remplie d'une grande quantité de graisse.

La cavité 200 est ménagée à la périphérie interne de la paroi 111 délimitée par l'ouverture circulaire 112. La cavité 200 est donc ouverte centralement. Le palier 110 est de forme creuse en étant métallique. L'axe X-X est l'axe de la cavité annulaire 200.

La cavité 200 est d'orientation axiale et est délimitée à l'avant par un tronçon annulaire d'orientation transversale de la paroi 111 débouchant dans l'ouverture 112. Ce tronçon réduit l'épaisseur de la paroi 111 au niveau de la cavité 200 et est prolongé à sa périphérie externe par un tronçon cylindrique d'orientation axiale de la paroi 111. Ce tronçon cylindrique est dirigé vers l'intérieur du palier 110. Le diamètre de la face interne de ce tronçon cylindrique est supérieur au diamètre de l'ouverture circulaire 112 en sorte que l'alésage interne de la paroi 111 est étagé en diamètre.
Ce palier 110 est ici en aluminium pour obtenir les formes souhaitées.
La cavité 200 est obtenue par moulage ou en variante par usinage.
Il en est de même de la creusure 300, 1300.

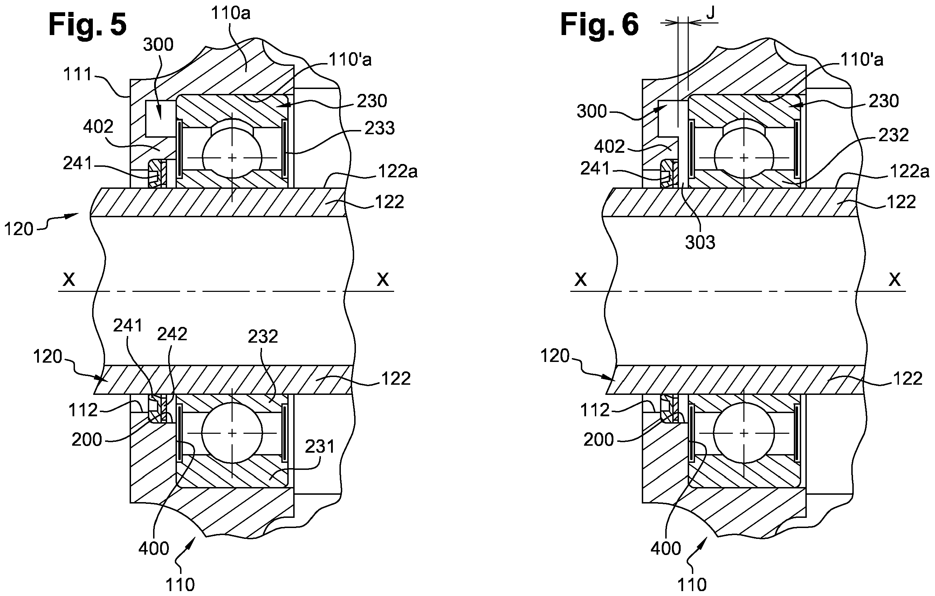

Le palier 110 est équipé du joint à lèvre 240, qui est monté à serrage dans sa cavité 200 de maintien et comporte à l'avant une partie en élastomère 241 et à l'arrière une rondelle métallique 242 de renfort.
La partie en élastomère est massive à sa périphérie externe. Cette partie périphérique coopère avec le tronçon d'orientation transversale et le tronçon cylindrique d'orientation axiale, qui délimitent la cavité 200.
La face arrière du tronçon d'orientation transversale de la cavité 200 constitue une butée d'appui pour la face avant de la partie massive en élastomère 241 du joint 240. Cette butée est une butée axiale de forme annulaire La partie en élastomère 241 coopère à sa périphérie externe à serrage avec la face interne du tronçon cylindrique délimitant la cavité 200.
La partie en élastomère 241 du joint 240, de forme annulaire, est dotée à sa périphérie interne d'une lèvre saillante vers l'intérieur pour contact étanche (voir figures 5, 6, 8) avec la périphérie externe 122a du corps principal 122 en forme de douille du lanceur 120 présentant à l'avant le pignon sortant d'un seul tenant avec ce corps comme à la figure 1.
La lèvre est inclinée vers l'avant pour mieux évacuer les projections, telles que les projections d'eau et protéger l'intérieur du palier 110.
La lèvre s'étend en saillie radialement vers l'intérieur par rapport au tronçon d'orientation transversale de la cavité. La lèvre pénètre dans l'ouverture 112.

Cette partie en élastomère 241 est solidaire à l'arrière de la rondelle de renfort métallique 242, ici en acier. La face arrière de la rondelle 242 constitue la face arrière du joint 240. La lèvre s'étend en saillie radiale vers l'intérieur par rapport à la rondelle 242 comme visible dans les figures.

Dans le premier mode de réalisation des figures 1 à 6, la longueur axiale du tronçon d'orientation axiale de la cavité 200 est, selon une caractéristique, supérieure à l'épaisseur du joint 240.
La cavité 200 est, selon une caractéristique, plus longue axialement que l'épaisseur du joint 240 mesurée axialement.

La face arrière 400 de la paroi avant 111 est annulaire et d'orientation transversale. Elle est trouée centralement à la faveur de l'ouverture circulaire 112 et de la cavité 200 annulaire (Figures 5 et 6).
Cette face 400 est prolongée à sa périphérie externe par la face interne 110'a du manchon 110a cylindrique, que présente intérieurement le palier 110 comme à la figure 1. Ce manchon 110a s'étend perpendiculairement par rapport à la paroi 111.
La face 110'a est donc cylindrique et d'orientation axiale.
Le palier 110 présente ainsi intérieurement un chambrage annulaire délimité par les faces 400, 110'a. Ce chambrage est dédié au montage d'un roulement 230, qui consiste dans ce mode de réalisation en un roulement à billes du type étanche.
Le palier 110 est équipé dans les figures 5 à 8 de ce roulement 230 dotée d'une bague externe 231 montée à serrage dans ce chambrage 400, 110'a.
La cavité 200 est décalée axialement vers l'avant par rapport au roulement 230.

La face avant du roulement 230 s'étend en regard de la creusure 300, 1300 et de la cavité 200.
La bague externe 231 est en contact de serrage à sa périphérie externe avec la face interne 110'a. La face arrière 400 constitue à sa périphérie externe une butée d'appui pour la face avant de la bague externe 231, comme visible dans les figures 5 à 8. Cette butée est une butée axiale de forme annulaire et constitue une portée d'appui pour la face avant de la bague 231.
La périphérie interne de la bague interne 232 de ce roulement 230 est destinée à coopérer avec la périphérie externe 122a du corps 122 du lanceur 120 (Voir figures 5, 6, 8).
Cette bague 232 est une bague de guidage axial du corps 122 du lanceur 120 lorsque ledit corps se déplace axialement et en rotation de manière précitée. La référence 233 désigne les moyens d'étanchéité intervenant entre les bagues 231, 232 que présente, de manière connue, un roulement à billes étanche. Ces moyens comportent notamment des déflecteurs.
Ce roulement est rempli de graisse pour augmenter sa durée de vie et diminuer les frottements de roulement.

Suivant une caractéristique une creusure est réalisée dans la face arrière 400 de la paroi 111.
La creusure 300, 1300 est implantée au moins en majeure partie à l'extérieur de la cavité 200.
Cette creusure est configurée pour former une réserve de graisse remplie de graisse référencée en 301 à la figure 3.
Les moyens d'étanchéité 233 du roulement 230 évitent un mélange entre la graisse du roulement 230 et la graisse 301 de la creusure. Chaque graisse est donc choisie selon les fonctions à réaliser. Cette graisse 301 est ici différente de la graisse du roulement étanche 230.
Au moins un passage pour la graisse existe entre la creusure et la face avant du roulement 230 pour accès de la graisse à la cavité 200 et à la périphérie externe 122a du corps 122.
La graisse 301 ne peut s'échapper vers l'avant et vers l'extérieur du fait de la présence du joint 240, qui a ainsi une fonction supplémentaire.
La graisse 301 lubrifie le contact de coulissement entre le corps 122 du lanceur 120 et la bague interne 231 du roulement 230. Cette graisse 301 forme un film lubrifiant au niveau de la périphérie externe 122a du corps 122. Ce film protège le corps 122 contre la corrosion et facilite le coulissement de ce corps 122 dans la bague interne 232 du roulement 230.

Le joint 240 évite la pénétration de poussières ou d'eau chargée d'éléments corrosifs ou de toute autre souillure à l'intérieur du palier 110.
Le joint 240 nettoie le corps 122.

Dans toutes les figures un jeu axial fonctionnel existe entre la face arrière 400 et les moyens d'étanchéité 233.
Le diamètre externe de la bague interne 232 du roulement 230 est inférieur au diamètre de la face interne du tronçon d'orientation axiale de la cavité 200 en sorte qu'aucun contact ne se produit entre la face avant de la bague interne 232 et la face arrière 400 de la paroi transversale 111.

Dans le premier mode de réalisation préférentiel des figures 2 à 6 la creusure 300, remplie de graisse 301, comporte à sa périphérie interne trois canaux radiaux 302, 303, 304 d'accès à la cavité 200 et à la périphérie externe 122a du corps 122 afin de distribuer une quantité de graisse et donc de lubrifiant durant toute la vie du démarreur. Les canaux 302, 303 et 304 constituent le passage de graisse précité et sont délimités par la face avant du roulement 230.
Dans ce mode de réalisation la creusure 300 est réalisée à la périphérie externe de la face arrière 400 en sorte que l'appui de la face avant de la bague externe 231 est interrompu localement.
La creusure 300 est implantée en majeure partie à l'extérieur de la cavité 200. Elle est de forme annulaire (figures 3 et 4) et s'étend circonférentiellement sur 120° pour contenir une quantité suffisante de graisse tout en ayant un bon appui pour la face avant de la bague externe 231 du roulement 230.
Elle est implantée de préférence dans la position verticale haute en considérant l'axe Y-Y de la figure 2, qui représente le carter dans sa position de fixation sur une partie fixe du véhicule automobile. La creusure 300 est donc réalisée dans la portion haute de la face 400 pour que la graisse puisse descendre par gravité.
La creusure 300 affecte donc la portion de la face arrière 400 la plus proche de la périphérie externe du palier 110. Cette périphérie externe est dotée d'une cavité 310 du carter servant de réceptacle au noyau mobile du contacteur électromagnétique.

En variante la creusure est décalée circonférentiellement par rapport à l'axe Y-Y de la figure 2.
Deux bandes de matière 401, 402 en forme de secteur annulaire sont implantées à la périphérie interne de la creusure et délimitent intérieurement la creusure 300. Ces bandes 401, 402 délimitent les canaux 302, 303, 304 avec les bords latéraux de la creusure 300.
Abstraction faite des canaux 302, 303, 304, la creusure 300 s'étend donc à l'extérieur de la cavité 200. Les canaux 302, 303, 304 affectent localement l'extrémité arrière de la cavité 200 de manière décrite ci-après.
Ainsi les premières extrémité circonférentielles en vis-à-vis des bandes 401, 402 délimitent le canal radial 303. Le canal radial 304 est délimité par la deuxième extrémité circonférentielle de la bande de matière 402 et par le premier bord latéral d'extrémité circonférentielle de la creusure 300, tandis que le canal radial 302 est délimité par la deuxième extrémité circonférentielle de la bande 401 et par le second bord latéral d'extrémité circonférentielle de la creusure.
Les canaux débouchent dans la cavité 200, qui est entaillée localement à l'arrière comme visible à la figure 6.
Les canaux 302 à 304 sont de longueur axiale correspondant (Figure 6) au jeu axial J, qui existe entre la face arrière du joint 240, c'est-à-dire la face arrière de la rondelle métallique de renfort 242, et la face avant du roulement 230.
Les canaux radiaux débouchent au niveau de la face arrière du joint 240 pour accès de la graisse 301 à la face avant de la bague interne 232 et à la périphérie externe 122a du corps 122.
L'extrémité arrière du tronçon cylindrique de la paroi 111 délimitant la cavité est donc entaillée pour formation des canaux 302, 303, 304.

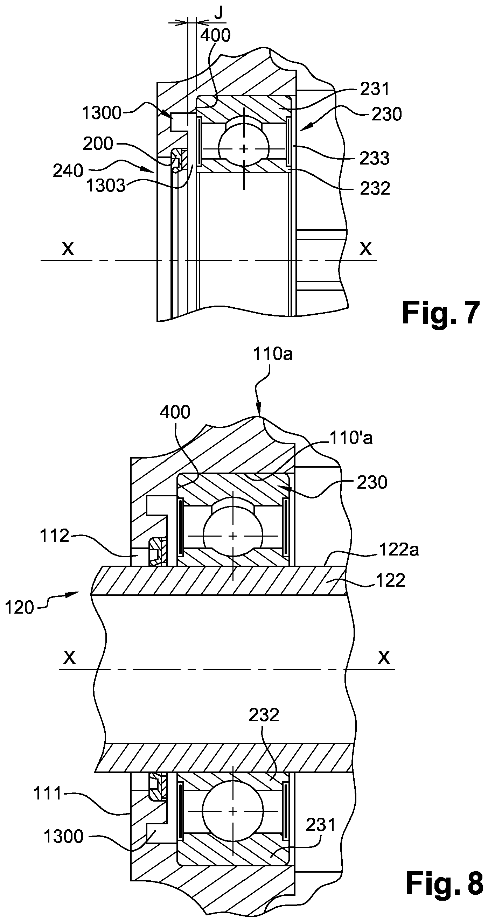

Dans le deuxième mode de réalisation de l'invention (Figures 7 et 8) la creusure 1300 consiste en une gorge annulaire réalisée dans la face 400.

Cette gorge est implanté radialement en regard des moyens d'étanchéité 233 du roulement 230 et à l'extérieur de la cavité 200 entaillée localement pour formation de canaux radiaux 1303 d'accès à la périphérie externe 122a du corps 122. Le jeu J existe, comme à la figure 6, entre la face avant du roulement 230 et la face arrière du joint 240, la cavité 200 étant entaillée localement à l'arrière pour formation des canaux 1303.
L'appui de la face avant de la bague 231 sur la face arrière 400 annulaire est continu.
En variante la longueur axiale de la cavité 200 est globalement égale à l'épaisseur, mesurée axialement, du joint 240 en sorte que les canaux 1003 sont continus et constituent un espace annulaire de jeu J.

Dans tous les modes de réalisation ce jeu J, entre le fond du passage et la face avant du roulement, est calibré pour que la graisse s'écoule progressivement par gravité au niveau de la périphérie externe 122a du corps 122 et ce entre la face arrière du joint 240 et la face avant du roulement 230.

La creusure des figures 2 à 8 est borgne. Elle est ouverte au niveau de son extrémité axiale en regard du roulement. Le fond de la creusure est fermé

Le montage du palier avant équipé de son joint 240, de son roulement 230 et de sa graisse est réalisé de la manière suivante :
- dans une première étape on réalise la cavité et la creusure à passage d'accès à la cavité soit par usinage de la face arrière soit par moulage ;
- dans une deuxième étape on monte le joint 240 dans sa cavité 200 ;
- dans une troisième étape on remplit la creusure de graisse 301;
- dans une quatrième étape on monte le roulement à billes étanche 230 par enfilage axial à serrage de la bague externe 231 dans la face 110'a.

On obtient ainsi un palier avant manipulable et transportable sans risque de perdre la graisse car la face avant du roulement est en regard de la creusure remplie de graisse pour formation d'une réserve de graisse.

On monte ensuite les autres composants du démarreur et du carter de celui-ci.

On appréciera que la bague interne 232 du roulement n'est pas modifiée et que la formation de la creusure, notamment par moulage, est économique.
Cette bague 232 n'est pas dotée de rainures de réserve de graisse à sa périphérie interne et n'est donc pas usinée contrairement à la bague interne du document US 4 995 275.

En outre il est plus facile de remplir la creusure de l'invention de graisse, que de remplir les rainures de la bague interne du roulement de graisse.

De plus il n'y a pas de risque de coulure et de pollution de la graisse car le roulement protège la réserve de graisse, constituée par la graisse contenue dans la creusure, pendant la manipulation et le transport du palier avant.

Dans le document US 4 995 275 la totalité de la graisse est mise en oeuvre dès le début du fonctionnement du démarreur et peut par conséquence se dégrader et être polluée rapidement.
Dans les solutions selon l'invention la graisse s'écoule progressivement par gravité et permet d'assurer la lubrification et la protection contre la corrosion de l'interface corps principal du lanceur/ roulement à billes.

Le joint est simplifié et est configuré pour accès de la graisse à l'espace délimité par la face arrière du joint et par la face avant du roulement.

Il ressort de la description et des figures qu'une cavité 200 de montage d'un joint d'étanchéité 240 est ménagée à la périphérie interne de la face arrière 400 de la paroi 111 et que cette face arrière 400, d'une part, est configurée pour constituer une butée d'appui pour la bague externe 231 d'un roulement 230, et d'autre part présente au moins une creusure 300, 1300 destinée à être remplie de graisse pour formation d'une réserve de graisse ; ladite creusure étant implantée au moins en majeure partie à l'extérieur de la cavité 200.

Un jeu axial existe en outre entre la face arrière du joint et la face avant du roulement.

Le tronçon d'orientation axiale délimite la cavité et intérieurement la creusure. Ce tronçon est interrompu par le ou les canaux.
La creusure comporte dans les figures un fond d'orientation transversale, dont l'épaisseur est déterminée pour avoir la résistance nécessaire.
L'épaisseur du fond de la creusure est dans un mode de réalisation égale à l'épaisseur du tronçon d'orientation transversale délimitant la cavité 200.

La creusure présente à sa périphérie interne et externe une forme annulaire. Elle est continue à sa périphérie externe et est interrompue à sa périphérie interne.

La longueur axiale de la cavité 200 est, dans les figures 2 à 8, globalement égale ou supérieure à l'épaisseur du joint

Bien entendu la présente invention n'est pas limitée aux exemples de réalisation représentés.

Ainsi les solutions selon l'invention permettent de remplacer le roulement à bille par un roulement à rouleaux, de préférence étanche, puisque la réserve de graisse est formée dans la face arrière de la paroi transversale.

Les canaux 302, 303, 304 sont en variante inclinés par rapport à la direction radiale.
Le nombre de canaux dépend des applications.
Un seul canal local peut être prévu.
En variante au moins deux canaux locaux sont prévus. Pour cela il suffit de remplacer les deux bandes de matière 401, 402 par une bande de matière unique.
Cette bande de matière unique, par exemple en forme de secteur annulaire, se raccorde en variante à l'un des bords d'extrémité circonférentielle de la creusure en sorte qu'un seul canal local est prévu.
En variante on augmente le nombre de canaux locaux en augmentant le nombre de bandes de matière.

En variante ce canal est circonférentiellement continu et s'étend par exemple dans le mode de réalisation des figures 7 et 8 sur 360°.
Dans ces figures 7 et 8 on peut créer le nombre de canaux souhaités.
Le passage entre la creusure et la cavité comporte donc au moins un canal, qui en variante est circonférentiellement continu.

En variante la face arrière de la paroi 111 présente deux creusures, de plus petites tailles circonférentielle que la creusure 300. Ces creusures sont par exemple implantées circonférentiellement de part et d'autre da l'axe X-X dans la partie haute de la face 400. Elles s'étendent circonférentiellement sur moins de 120°. Le ou les canaux associés à chaque creusure sont d'orientation radiale ou en variante inclinés par rapport à la direction radiale pour que la graisse s'écoule vers le centre.

Le joint comporte en variante deux lèvres inclinées axialement en sens inverse comme dans le document US 4 995 275. Ce joint est configuré pour qu'un jeu axiale plus important que dans ce document US 4 995 275, existe entre la lèvre dirigée vers le roulement et la face avant du roulement.
Dans ce cas la longueur axiale de la cavité est en variante inférieure à l'épaisseur du joint mesurée axialement. Cette longueur est voisine de l'épaisseur du joint.

Le fond de la ou les creusures est en variante incliné.
La ou les périphéries et le fond de la ou les creusures ont en variante une autre forme du fait que la ou les creusures sont dans un mode de réalisation obtenues par moulage.

La présence de la fourchette 1 n'est pas nécessaire, le contacteur pouvant comporter une bobine entourant l'entraîneur de la roue libre constituant le noyau plongeur du contacteur.

Le contacteur électromagnétique s'étend dans le mode de réalisation de la figure 1 parallèlement au moteur électrique du démarreur en étant porté par le palier avant 12. En variante il est prévu un dispositif de renvoi entre la fourche et le noyau mobile du démarreur en sorte que dans ce cas le contacteur s'étend à l'arrière du moteur électrique.

Alors que dans le document FR 2 764 946 le pignon est monobloc avec l'extrémité avant de la douille en sorte que le nombre de dents du pignon est limité et que le pignon est dans la même matière que la douille constituant le corps principal du pignon, en variante en variante le pignon est distinct du corps principal en forme de douille du lanceur comme décrit dans le document US 4 818 889 (figure 1) en sorte que la matière du pignon peut être différente de celle du corps principal du lanceur et que le nombre de dents du pignon n'est pas limité par le diamètre de l'ouverture 112 et par le diamètre externe du corps principal 122.
Dans ce cas le pignon est lié en rotation à l'extrémité avant, en forme de nez, du corps principal par une liaison à cannelures complémentaires d'orientation axiale intervenant entre la périphérie externe du nez et à la périphérie interne du pignon. Cette liaison autorise un mouvement axial du pignon par rapport à la douille. Il est prévu une butée pour limiter le mouvement axial du pignon, ainsi qu'un jonc d'arrêt pour immobiliser axialement la butée en combinaison avec un ressort de rattrapage des jeux prenant appui sur un épaulement du nez pour solliciter axialement le pignon au contact de la butée. Ce ressort est comprimé lors du montage de la butée et du jonc. Le jonc est reçu dans un logement et dans une gorge semi cylindrique formés respectivement dans la butée et dans le nez. Pour plus de précisions on se reportera à ce document US 4 818 889. En variante l'extrémité avant du corps 122 est moins dure que le reste du corps et on fixe le pignon par sertissage sur cette extrémité avant.

De manière précitée le démarreur peut être équipé ou non d'un réducteur de vitesse en sorte que l'arbre de sortie du démarreur est distinct ou d'un seul tenant avec l'arbre du moteur électrique.
L'arbre de sortie du démarreur est en variante constitué par un manchon du train épicycloïdal intercalé entre un pignon de l'arbre de sortie du moteur électrique du démarreur et la roue libre comme visible à la figure 1 du document US 4 818 889.

La roue libre du démarreur est en variante à embrayage conique intervenant entre l'entraîneur et l'extrémité arrière de la douille comme décrit par exemple dans le document WO 03/002870.

L'articulation de la fourchette peut être réalisée de manière quelconque, c'est-à-dire avec ou sans plaque.

Le démarreur peut servir à entraîner le moteur à combustion interne d'un véhicule de tourisme, d'un camion, d'un tracteur agricole ou d'un bateau. Le démarreur en variante est un démarreur pour un moteur à combustion interne fixe servant par exemple à entraîner une prise de force.

On appréciera que la portée d'appui pour la bague externe du roulement n'est pas affectée outre mesure par la ou les creusures.

## Revendications

1. Palier avant (110) de démarreur (100) de moteur thermique doté d'un lanceur (120) à pignon sortant (121), notamment pour véhicule automobile, du genre comportant à l'avant une paroi transversale (111) munie d'une ouverture (112) pour passage d'un corps (122) du lanceur (120), une cavité (200) ménagée dans la face arrière (400) de la paroi transversale (111) à la périphérie interne de celle-ci pour montage d'un joint d'étanchéité (240), dans lequel la face arrière (400) de la paroi transversale (111) est configurée pour constituer une butée d'appui pour la bague externe (231) d'un roulement (230), **caractérisée en ce que** cette face arrière (400) présente au moins une creusure (300, 1300) destinée à être remplie de graisse pour formation d'une réserve de graisse et **en ce que** la creusure (300, 1300) est implantée au moins en majeure partie à l'extérieur de la cavité (200).

2. Palier avant selon la revendication 1 ; **caractérisé en ce qu'**il présente intérieurement une face cylindrique interne (110'a) se raccordant à la périphérie externe de la face arrière (400) de la paroi transversal (11) pour formation d'un chambrage et **en ce qu'**il est équipé d'un roulement (230) dotée d'une bague externe (231) en appui sur la face arrière (400) et en contact de serrage avec la face cylindrique interne (110'a).

3. Palier avant selon la revendication 2, **caractérisé en ce que** la cavité (200) est décalée axialement vers l'avant par rapport au roulement (230).

4. Palier avant selon la revendication 3, **caractérisé en ce que** le roulement (230) est étanche et en qu'au moins un passage (302, 303, 304-1303) pour la graisse existe entre la creusure (300, 1300) et la face avant du roulement (230).

5. Palier avant selon la revendication 4, **caractérisé en ce que** la creusure (300) est réalisée à la périphérie externe de la face arrière (400) de la paroi transversale (111) et affecte localement l'appui de la bague externe (231) du roulement (230) sur ladite face arrière (400).

6. Palier avant selon la revendication 5, **caractérisé en ce que** le passage pour la graisse comporte au moins deux canaux et **en ce que** la creusure (300) est délimitée intérieurement par au moins une bande de matière définissant avec les bords latéraux de la creusure (300) les deux canaux.

7. Palier avant selon la revendication 6, caractérisé en ce la creusure (300) est délimitée intérieurement par deux bandes de matière (401, 402), en ce que chaque bande de matière définie avec l'un des bords latéraux de la creusure (300) un canal (302, 304) et en ce qu'un troisième canal (303) est présent entre les extrémités circonférentielles en vis-à-vis des deux bandes de matière (401, 402).

8. Palier avant selon la revendication 6 ou 7, **caractérisé en ce que** la creusure (300) s'étend circonférentiellement globalement sur 120°.

9. Palier avant selon la revendication 8, **caractérisé en ce que** la creusure (300) est réalisée dans la portion haute de la face interne (400) de la paroi transversale (11) la plus proche de la périphérie externe (310) du palier avant (110).

10. Palier avant selon la revendication 4, **caractérisé en ce que** la creusure (1300) consiste en une gorge annulaire (1300) et **en ce que** le passage (1303) comporte un ou plusieurs canaux.

11. Palier avant selon l'une quelconque des revendications 4 à 10, **caractérisé en ce que** le canal ou les canaux (302, 303, 304-1303) débouchent à l'arrière de la cavité (200), qui est délimité par un tronçon d'orientation axiale de la paroi transversale (111) et **en ce que** le tronçon d'orientation axiale est entaillé localement à l'arrière par le ou les canaux.

12. Palier avant selon la revendication 11, **caractérisé en ce que** la cavité (200) est d'orientation axiale et est équipée du joint (240) comportant au moins une lèvre inclinée vers l'avant et comportant à l'avant une partie en élastomère comprenant la lèvre et à l'arrière une rondelle de renfort (242) et **en ce que** la longueur axiale de la cavité (200) est supérieure ou égale à l'épaisseur du joint (240).

13. Palier avant selon la revendication 12, **caractérisé en ce qu'**un jeu axial existe entre le joint (240) et le roulement (203).

14. Palier avant selon la revendication 12 ou 13, **caractérisé en ce que** le roulement est un roulement à billes étanche doté d'une bague interne (232) et **en ce que** le ou les canaux débouchent au niveau de la face arrière du joint (240) pour accès de la graisse (301) à la face avant de la bague interne (232).

15. Démarreur de moteur thermique à pignon sortant (121), notamment pour véhicule automobile, comprenant un carter doté d'un palier avant (110) pourvu d'une face avant munie d'une ouverture (112), un lanceur (120) doté d'une corps principal (122) traversant l'ouverture (112) du palier avant (110) **caractérisé en ce qu'**il comporte un palier avant (110) selon l'une quelconque des revendications précédentes.

## Patentansprüche

1. Vorderes Lager (110) eines Anlassers (100) eines Verbrennungsmotors, ausgestattet mit einem Starter (120) mit ausgehendem Ritzel (121), insbesondere für ein Kraftfahrzeug, vom Typ aufweisend vorn eine Querwand (111), die mit einer Öffnung (112) zum Hindurchführen eines Korpus (122) des Starters (120) versehen ist, eine Kavität (200), die in die hintere Fläche (400) der Querwand (111) an der inneren Peripherie dieser zum Anbringen einer Dichtung (240) eingelassen ist, bei dem die hintere Fläche (400) der Querwand (111) konfiguriert ist, um einen Abstützungsanschlag für den äußeren Ring (231) eines Wälzlagers (230) zu bilden, **dadurch gekennzeichnet, dass** diese hintere Fläche (400) mindestens einen Hohlraum (300, 1300) aufweist, der dazu bestimmt ist, zur Bildung einer Fettreserve mit Fett gefüllt zu werden, und dass der Hohlraum (300, 1300) mindestens zu einem größeren Teil außerhalb der Kavität (200) angeordnet ist.

2. Vorderes Lager nach Anspruch 1, **dadurch gekennzeichnet, dass** es innen eine zylindrische Innenfläche (110'a) aufweist, die sich an die äußere Peripherie der hinteren Fläche (400) der Querwand (11) zur Bildung einer Aussparung anschließt und dass es mit einem Wälzlager (230) ausgestattet ist, das mit einem äußeren Ring (231) versehen ist, der an der hinteren Fläche (400) abgestützt ist und mit der zylindrischen Innenfläche (110'a) in Druckkontakt ist.

3. Vorderes Lager nach Anspruch 2, **dadurch gekennzeichnet, dass** die Kavität (200) bezogen auf das Wälzlager (230) axial nach vorn versetzt ist.

4. Vorderes Lager nach Anspruch 3, **dadurch gekennzeichnet, dass** das Wälzlager (230) dicht ist und dass mindestens ein Durchgang (302, 303, 304-1303) für das Fett zwischen dem Hohlraum (300, 1300) und der vorderen Fläche des Wälzlagers (230) existiert.

5. Vorderes Lager nach Anspruch 4, **dadurch gekennzeichnet, dass** der Hohlraum (300) an der äußeren Peripherie der hinteren Fläche (400) der Querwand (111) realisiert ist und lokal die Abstützung des äußeren Rings (231) des Wälzlagers (230) auf der genannten hinteren Fläche (400) beeinflusst.

6. Vorderes Lager nach Anspruch 5, **dadurch gekennzeichnet, dass** der Durchgang für das Fett mindestens zwei Kanäle aufweist und dass der Hohlraum (300) innen durch mindestens einen Materialstreifen begrenzt wird, der mit den seitlichen Rändern des Hohlraums (300) die zwei Kanäle definiert.

7. Vorderes Lager nach Anspruch 6, **dadurch gekennzeichnet, dass** der Hohlraum (300) innen durch zwei Materialstreifen (401, 402) begrenzt wird, dass jeder Materialstreifen mit einem der seitlichen Ränder des Hohlraums (300) einen Kanal (302, 304) definiert und dass ein dritter Kanal (303) zwischen den Umfangsenden gegenüber den zwei Materialstreifen (401, 402) vorhanden ist.

8. Vorderes Lager nach Anspruch 6 oder 7, **dadurch gekennzeichnet, dass** der Hohlraum (300) sich in Umfangsrichtung insgesamt über 120° erstreckt.

9. Vorderes Lager nach Anspruch 8, **dadurch gekennzeichnet, dass** der Hohlraum (300) im oberen Bereich der inneren Fläche (400) der Querwand (11), der der äußeren Peripherie (310) des vorderen Lagers (110) am nächsten liegt, realisiert ist.

10. Vorderes Lager nach Anspruch 4, **dadurch gekennzeichnet, dass** der Hohlraum (1300) aus einer Ringkehle (1300) besteht und dass der Durchgang (1303) einen oder mehrere Kanäle aufweist.

11. Vorderes Lager nach einem der Ansprüche 4 bis 10, **dadurch gekennzeichnet, dass** der Kanal oder die Kanäle (302, 303, 304-1303) hinten an der Kavität (200) ausmünden, die durch einen Abschnitt zur axialen Ausrichtung der Querwand (111) begrenzt wird, und dass der Abschnitt zur axialen Ausrichtung hinten lokal durch den oder die Kanäle eingeschnitten wird.

12. Vorderes Lager nach Anspruch 11, **dadurch gekennzeichnet, dass** die Kavität (200) axialer Ausrichtung ist und mit der Dichtung (240) ausgerüstet ist, die mindestens eine nach vorn geneigte Lippe aufweist und die vorn einen Teil aus Elastomer, der die Lippe umfasst, und hinten eine Verstärkungsscheibe (242) aufweist, und dass die axiale Länge der Kavität (200) größer oder gleich der Dicke der Dichtung (240) ist.

13. Vorderes Lager nach Anspruch 12, **dadurch gekennzeichnet, dass** ein axiales Spiel zwischen der Dichtung (240) und dem Wälzlager (203) existiert.

14. Vorderes Lager nach Anspruch 12 oder 13, **dadurch gekennzeichnet, dass** das Wälzlager ein dichtes Kugellager, ausgestattet mit einem inneren Ring (232), ist und dass der oder die Kanäle in Höhe der hinteren Fläche der Dichtung (240) für den Zugang des Fetts (301) zur vorderen Fläche des inneren Rings (232) ausmünden.

15. Anlasser eines Verbrennungsmotors mit ausgehendem Ritzel (121), insbesondere für ein Kraftfahrzeug, umfassend ein Gehäuse, das mit einem vorderen Lager (110) ausgestattet ist, welches mit einer vorderen Fläche versehen ist, die mit einer Öffnung (112) ausgerüstet ist, einen Starter (120), ausgestattet mit einem Hauptkorpus (122), der die Öffnung (112) des vorderen Lagers (110) durchquert, **dadurch gekennzeichnet, dass** er ein vorderes Lager (110) nach einem der vorangehenden Ansprüche aufweist.

## Claims

1. Front bearing (110) for a combustion engine starter (100) provided with a starter drive assembly (120) with salient pinion (121), notably for a motor vehicle, of the kind comprising, at the front, a transverse wall (111) provided with an opening (112) for the passage of a body (122) of the starter drive assembly (120), a cavity (200) formed in the rear face (400) of the transverse wall (111) at the internal periphery thereof for the mounting of a seal (240), in which the rear face (400) of the transverse wall (111) is configured to constitute a thrust surface for the external ring (231) of a rolling bearing (230), **characterized in that** this rear face (400) has at least one recess (300, 1300) intended to be packed with lubricant to form a reserve of lubricant and **in that** the recess (300, 1300) is installed at least for the most part outside the cavity (200).

2. Front bearing according to Claim 1, **characterized in that** internally it has an internal cylindrical face (110'a) connecting to the external periphery of the rear face (400) of the transverse wall (11) to form a counterbore and **in that** it is equipped with a rolling bearing (230) provided with an external ring (231) pressing against the rear face (400) and in tight contact with the internal cylindrical face (110'a).

3. Front bearing according to Claim 2, **characterized in that** the cavity (200) is axially offset forwards with respect to the rolling bearing (230).

4. Front bearing according to Claim 3, **characterized in that** the rolling bearing (230) is sealed and **in that** there is at least one passage (302, 303, 304-1303) for the lubricant between the recess (300, 1300) and the front face of the rolling bearing (230).

5. Front bearing according to Claim 4, **characterized in that** the recess (300) is created at the external periphery of the rear face (400) of the transverse wall (111) and locally affects the seating of the external ring (231) of the rolling bearing (230) on the said rear face (400).

6. Front bearing according to Claim 5, **characterized in that** the lubricant passage comprises at least two ducts and **in that** the recess (300) is internally delimited by at least one strip of material which with the lateral edges of the recess (300) defines the two ducts.

7. Front bearing according to Claim 6, **characterized in that** the recess (300) is internally delimited by two strips of material (401, 402), **in that** each strip of material defines, with one of the lateral edges of the recess (300) a duct (302, 304) and **in that** there is a third duct (303) between the facing circumferential ends of the two strips of material (401, 402).

8. Front bearing according to Claim 6 or 7, **characterized in that** the recess (300) extends circumferentially over 120° overall.

9. Front bearing according to Claim 8, **characterized in that** the recess (300) is made in the upper portion of the internal face (400) of the transverse wall (11) closest to the external periphery (310) of the front bearing (110).

10. Front bearing according to Claim 4, **characterized in that** the recess (1300) consists of an annular groove (1300) and **in that** the passage (1303) comprises one or more ducts.

11. Front bearing according to any one of Claims 4 to 10, **characterized in that** the duct or ducts (302, 303, 304-1303) open at the rear of the cavity (200), which is delimited by an axially directed portion of the transverse wall (111), and **in that** the axially directed portion is cut across locally at the rear by the duct or ducts.

12. Front bearing according to Claim 11, **characterized in that** the cavity (200) is directed axially and is fitted with the seal (240) comprising at least one lip that is inclined forwards and comprising at the front a part made of elastomer comprising the lip and at the rear a reinforcing washer (242) and **in that** the axial length of the cavity (200) is greater than or equal to the thickness of the seal (240).

13. Front bearing according to Claim 12, **characterized in that** there is an axial clearance between the seal (240) and the rolling bearing (203).

14. Front bearing according to Claim 12 or 13, **characterized in that** the rolling bearing is a sealed ball bearing provided with an internal ring (232) and **in that** the duct or ducts open at the rear face of the seal (240) so that the lubricant (301) can access the front face of the internal ring (232).

15. Combustion engine starter with salient pinion (121), notably for a motor vehicle, comprising a casing provided with a front bearing (110) provided with a front face that has an opening (112), a starter drive assembly (120) provided with a main body (122) passing through the opening (112) in the front bearing (110) and **characterized in that** it comprises a front bearing (110) according to any one of the preceding claims.
